# EUROPÄISCHE PATENTANMELDUNG

(11) **EP 2 327 295 A2**
(43) Veröffentlichungstag der Anmeldung: **01.06.2011**
(21) Anmeldenummer: 10013669.6
(22) Anmeldetag: 15.10.2010
(51) Int. Cl.: A01G 9/14

(54) **Gewächshaus**

(30) Priorität: 30.11.2009 DE 202009016136 U
(71) Anmelder: Sapa Building System GmbH, 40878 Tatingen (DE)
(72) Erfinder: Erstling, Erich, D-45549 Sprockhövel (DE); Gansen, Klaus Dieter, D-42857 Remscheid (DE)
(74) Vertreter: Patentanwälte Buse, Mentzel, Ludewig

(57) **Zusammenfassung**

Die Erfindung betrifft ein neues hochisoliertes Gewächshaus, das einen verbesserten Wärmedurchgangskoeffizienten von 2,0 W/m²K bis 2,8 W/m²K zeigt. Dies wird durch eine noch bessere Wärmeisolierung, insbesondere durch Vorsehen weiterer Wärmebrücken, aber auch durch Verwendung von Isolierverglasungen mit 3 Scheiben möglich. (Fig. 2)

## Beschreibung

Die Erfindung betrifft ein Gewächshaus gemäß den Merkmalen des Oberbegriffs von Anspruch 1.

Aus dem europäischen Patent EP 0 744 121 B1 ist ein thermisch isoliertes Gewächshaus bekannt. Bei diesem Gewächshaus sind in den aus Stützen, Riegeln, Pfetten und Sprossen zusammengesetzten Rahmenteilen unter Zwischenschaltung von Dichtungen, Füllungsplatten eingesetzt. In den Stoßzwischenraum dieser Füllungsplatten ragen Profilstege ein, die einerseits Bestandteil von Sprossen und andererseits Bestandteil von Stützprofilen sind. Die Firstpfette haltert schwenkbeweglich ein Scharnierrahmenprofil der Lüftungsklappe. Das Lüftungsrandprofil der Lüftungsklappe ist mit den Sprossen der Lüftungsklappe verbunden, während die Sprossen an der unteren Dachkante mit einem Rinnenrandprofil verbunden sind. Zur Unterbrechung der Wärmebrücken im Bereich der Rahmenteile weisen die Profilstege sowohl der Sprossen als auch der Stützprofile Schraubnuten zur Festlegung einer dichten Abdeckleiste und eines Isolierkörpers auf. Die Firstpfette ist von einer an den Scharnierrahmenprofilen der Lüftungsklappen festgelegten Isolierkammern aufweisenden flexiblen Abdeckhaube übergriffen. Am Lüftungsrandprofil und am Rinnenrandprofil ist ein Isolierkammern aufweisendes Glashalteprofil, welches den Randbereich der Füllungspatte umfasst, festgelegt. Dieses wärmeisolierte Gewächshaus zeigt einen durchschnittlichen Wärmedurchgangskoeffizienten von 3,2 W/m²K bis 3,6 W/m²K.

Aufgabe der vorliegenden Erfindung ist es, ein Gewächshaus der vorgenannten Art so zu verbessern, dass der Wärmedurchgangskoeffizient wesentlich reduziert wird.

Diese Aufgabe wird mit einem Gewächshaus mit den Merkmalen des Anspruchs 1 gelöst. Das neue hochisolierte Gewächshaus zeigt Wärmedurchgangskoeffizienten von 2,0 W/m²K bis 2,8 W/m²K. Dies wird durch eine noch bessere Wärmeisolierung, insbesondere durch Vorsehen weiterer Wärmebrücken, aber auch durch Verwendung von Isolierverglasungen mit 3 Scheiben möglich.

Zur Unterbrechung der Wärmebrücke im Firstbereich wird eine die Firstpfette übergreifende Abdeckhaube doppelschalig mit mehreren dazwischen angeordneten Hohlkammern ausgebildet sowie zwischen dieser Abdeckhaube und der Firstpfette eine zusätzliche Dämmstoffeinlage vorgesehen. Diese hat im Querschnitt vorzugsweise eine pilzförmige Form, so dass Sie die gesamte Oberseite der Firstpfette abdeckt. Darüber hinaus ist es möglich, einzelne Hohlkammern der Abdeckhaube zusätzlich mit einem Isolierstoff zu füllen.

Um auch den unteren Randbereich der Lüftungsklappen und des Glasdaches stärker zu isolieren, sind die als Hohlkammerprofile ausgestaltete Glashalteprofile zusätzlich mit einem Isolierstoff gefüllt. Dieser wird insbesondere in der Hohlkammer vorgesehen, die sich benachbart zum Luftspaltes befindet, der zwischen der Lüftungsklappe und der darunter liegenden Füllungsplatte ist. Eine andere Maßnahme, die auch zusätzlich vorgesehen werden kann, ist es, die Glashalteprofile mit mehr als zwei Hohlkammern vorzusehen, so dass ein Wärmeübergang zwangsweise durch mehrere Hohlkammern erfolgen muss.

Zur Unterbrechung der Wärmebrücken im Stoßbereich der an den Sprossen und Pfetten gehalternden Füllungsplatten sind in diesem Stoßbereich zusätzliche Isolierungen vorgesehen. Dies können Isolierkörper sein, die zwischen der Abdeckleiste und dem an der Pfette befestigten Stützprofil mittels einer Schraube gehalten sind oder es wird ein Verbundprofil als Profilsteg vorgesehen, vorzugsweise bei den Profilstegen der Sprossen, wo der mittlere Bereich der Profilstege als Isoliersteg ausgestaltet ist. Zur Verringerung des Wärmedurchgangs kann der Isolierkörper oder der Isoliersteg zusätzlich Hohlkammern enthalten.

Die aufrecht stehenden Füllungsplatten des Gewächshauses können zusätzlich durch besser isolierende Dreifach-Isolierverglasungen ersetzt werden. Dieses Isolierglas besitzt einen Wärmedurchgangskoeffizienten von 0,5 W/m²K im Vergleich zu Doppelscheiben-Isolierglas mit einem Wärmedurchgangskoeffizienten von 1,0 W/m²K und trägt somit zu einer besseren Wärmeisolierung bei. Eine solche Dreifach-Isolierverglasung besitzt jedoch eine größere Breite von 36 mm im Vergleich zu Doppelscheiben-Isolierglas mit einer Breite von etwa 26 mm. Die verschiedenen Profile für die Rahmenteile des Gewächshauses, wie beispielsweise Lüftungsriegel, Stützprofil, Glashalteprofil und Sprossen sind vorzugsweise so ausgelegt, dass sie sowohl Füllungsplatten mit einer Breite von 25 mm als auch Füllungsplatten mit einer Breite bis 36 mm aufnehmen können. Die um 10 mm höhere Aufbauhöhe im Vergleich zum Stand der Technik verbessert zu dem die Statik des Gewächshausrahmens. Zusätzlich ermöglicht die höhere Aufbauhöhe das Vorsehen größerer und zusätzlicher Wasserkanäle, was zu einer besseren Sprossenentwässerung sowie Glasstoßentwässerung führt. Die Sprossenentwässerung wird wie an den nachfolgenden Beispielen sichtbar wird vorzugsweise über mehrere Ebenen realisiert.

Weitere vorteilhafte Ausführungsformen sind in den Unteransprüchen angegeben bzw. werden anhand der Zeichnung nachfolgend näher erläutert. Es zeigen:
- Fig. 1: den Aufbau einer Gewächshausaußenhaut in schematischer Darstellung,
- Fig. 2: eine Seite des Gewächshausdaches in einem Querschnitt der Linie II - II von Fig. 1,
- Fig. 3: den Querschnitt einer die Füllungsplatten in ihrem Stoßbereich halternden Sprosse gemäß dem Schnitt nach der Linie III von Fig. 2,
- Fig. 4: den mit IV in Fig. 2 gekennzeichneten Firstbereich in einer gegenüber Fig. 2 vergrößerten Schnittdarstellung,
- Fig. 5: den in Fig. 2 mit V gekennzeichneten unteren Randbereich der Lüftungsklappe in einer gegenüber Fig. 2 vergrößerten Schnittdarstellung,
- Fig. 6: den in Fig. 2 mit VI gekennzeichneten Pfettenbereich in einer gegenüber Fig. 2 vergrößerten Schnittdarstellung,
- Fig. 7: den mit VII in Fig. 2 gekennzeichneten unteren Dachrandbereich in einer gegenüber Fig. 2 vergrößerten Schnittdarstellung,
- Fig. 8a Fig. 8b Fig. 8c: drei mögliche Querschnitte einer die Füllungsplatte in ihrem Stoßbereich halternden Sprosse gemäß dem Schnitt nach der Linie VIII von Fig. 2,
- Fig. 9: eine Seite der Gewächshauswand in einem Querschnitt nach der Linie IX ― IX von Fig. 1,
- Fig. 10 a Fig. 10 b: zwei Querschnitte einer die Füllungsplatten im Stoßbereich halternden Stütze gemäß dem Schnitt nach Linie X ― X von Fig. 9.

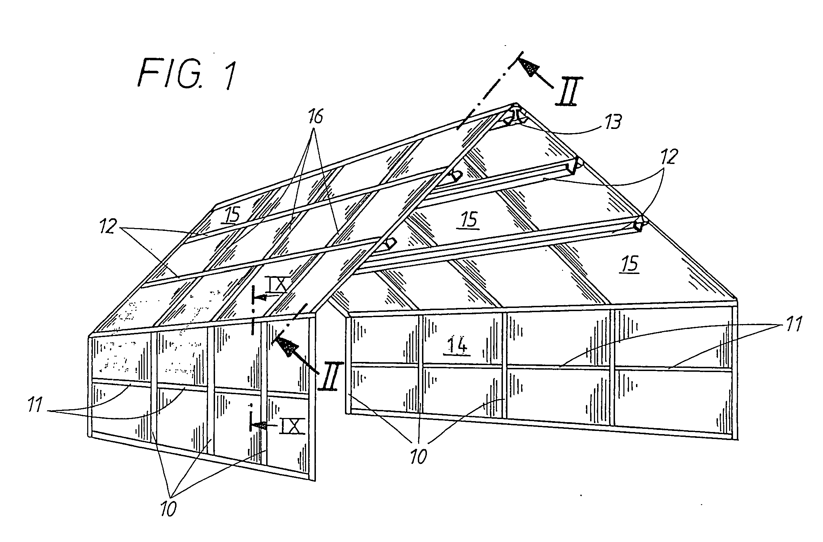

Fig. 1 zeigt das erfindungsgemäße Gewächshaus, bei dem aus Gründen der Übersichtlichkeit das innenseitige Traggerüst und die Giebelseiten nicht dargestellt sind. Bei dem Gewächshaus bestehen die Rahmenteile für die Wände im Wesentlichen aus vertikal verlaufenden Stützen 10 und horizontal angeordneten Riegeln 11, die Rahmen für die senkrecht angeordnete Füllungsplatten 14 bilden. Bei diesen Füllungsplatten 14 handelt es sich um eine Dreifachglasisolierung. Im Dachbereich des Gewächshauses bestehen die Rahmenteile im Wesentlichen aus in Längsrichtung des Gewächshauses verlaufenden Pfetten 12 und einer Pfette 13 am First, während in Richtung der Dachneigung Sprossen 16 verlaufen. Die Pfetten 12 und die Sprossen 16 bilden Rahmen für Füllungsplatten 15. Diese Füllungsplatten 15 bestehen in diesem Fall aus Doppelglasisolierungen. Je nach Wärmedämmungsgrad können die Füllungsplatten 14, 15 eine unterschiedliche Stärke und Dicke aufweisen. Es ist auch möglich, statt Isolierglasscheiben Kunststoffplatten zu verwenden. Die vorgenannten Profile für die Rahmenteile sind Strangpressprofile aus Aluminium und seinen Legierungen und sind in bekannter Weise miteinander verbunden.

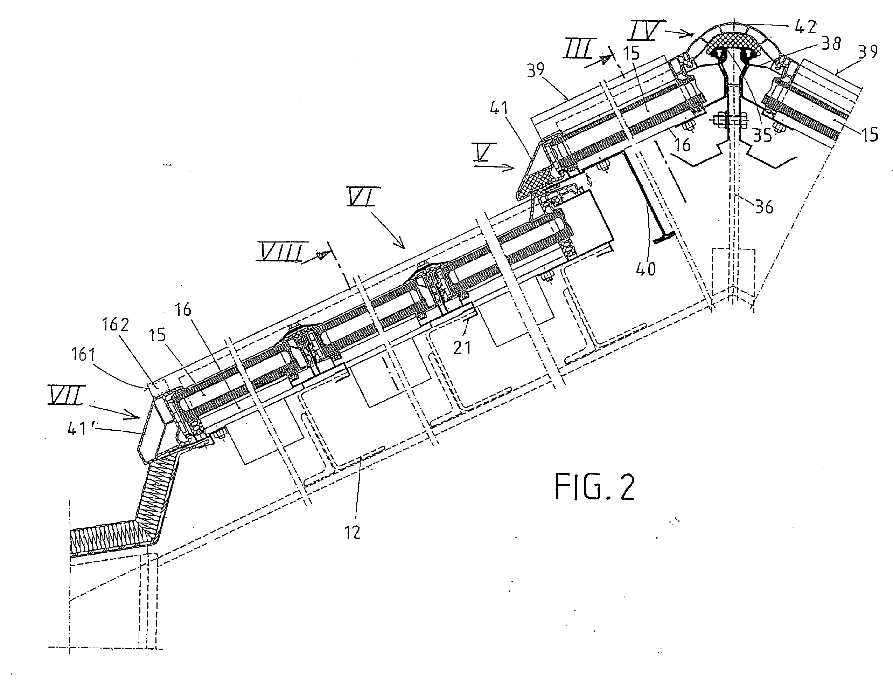

In Fig. 2 ist eine Dachhälfte des erfindungsgemäßen Gewächshauses im Schnitt dargestellt. In strichpunktierten Linien ist das stählerne Traggerüst des Gewächshauses angedeutet. An diesem Traggerüst sind die Pfetten 12 abstandsweise in bekannter Art festgelegt. Quer zur Längsrichtung der Pfetten 12 verlaufen die Sprossen 16, die auf den oberen Schenkeln der C-förmigen Pfetten 12 aufliegen und über eine Schraubverbindung mit diesen Pfetten 12 verbunden sind.

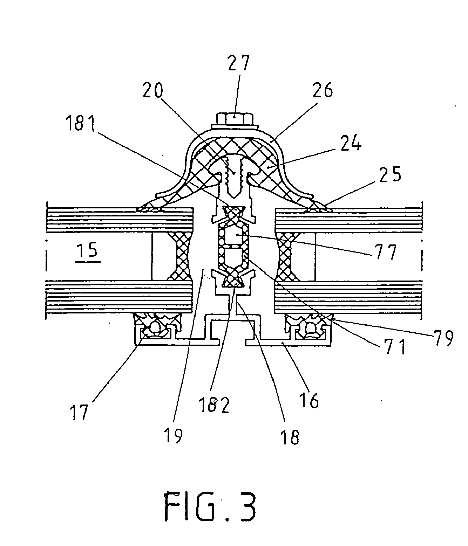

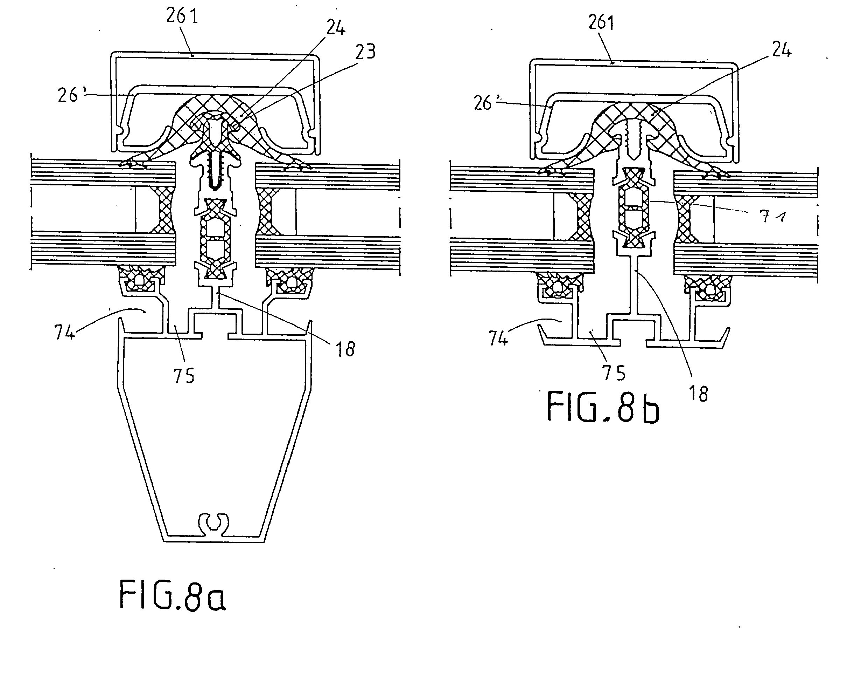

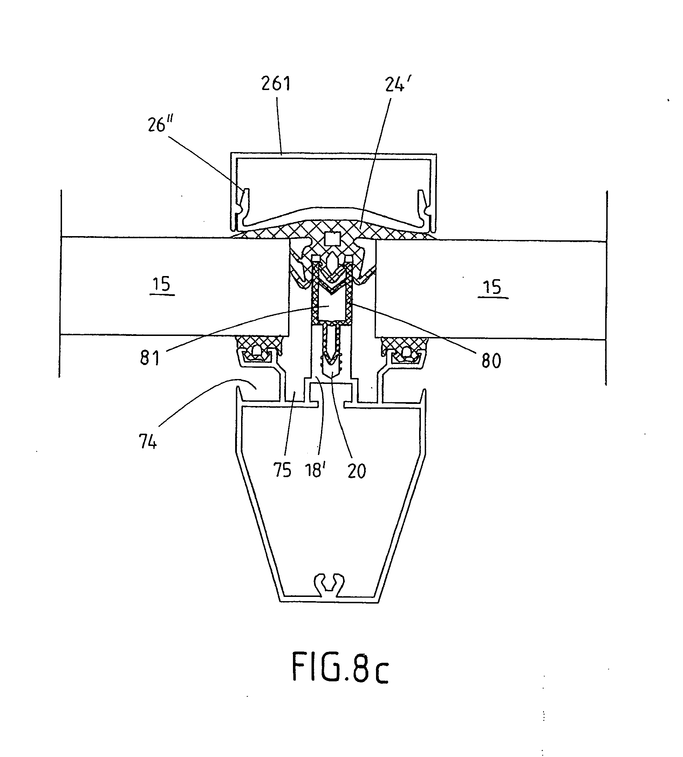

Wie besser aus Fig. 3 zu ersehen, ragen die Sprossen 16 mit einem Profilsteg 18 in den Stoßzwischenraum 19 zwischen den Füllungsplatten 15, wobei dieser Profilsteg 18 in bekannter Weise an seinem oberen Ende eine Schraubnut 20 aufweist. Mittels einer Schraube 27 lässt sich eine pilzkopfartig gestaltete elastische Abdeckleiste 24 mit der Sprosse 16 verbinden. Diese Abdeckleiste 24 besitzt beidseitig Dichtlamellen 25, die in Anlage auf der Oberseite der Füllungsplatten 15 sind. Zur Sicherung der Abdeckleiste 24 und zur Andrückung der Dichtlamellen 25 an die Füllungsplatte 15 ist die Abdeckleiste 24 von einem langgestreckten metallischen Abdeckprofil 26 übergriffen, das zusammen mit der Abdeckleiste 24 mittels in die Schraubnut 20 eingedrehter Schrauben 27 am Profilsteg 18 der Sprosse 16 festgelegt ist. Zusätzlich kann ein Abdeckprofil 26' mit einer Abdeckhaube 261 versehen sein, die an dem Abdeckprofil 26' verrastet ist, siehe auch Fig. 8a, 8b oder Fig. 8c. In erfindungsgemäßer Weise ist der Profilsteg 18 als Verbundprofil ausgestaltet, nämlich der mittlere Bereich des Profilstegs 18 besteht aus einem Isoliersteg 71. Dieser Isoliersteg 71 weist zur Erhöhung der Wärmedämmung übereinander angeordnete Hohlkammern 77 auf. In bevorzugter Weise wird der Isoliersteg 71 bei der Herstellung in das Profil für die Sprosse 16 eingerollt. Dazu besitzt der untere Bereich des Profilstegs 18 eine nach oben gerichtete Nut 182, in welcher der Isoliersteg 71 formschlüssig eingreift. In gleicher Weise besitzt das Oberteil des Profilstegs 18 eine nach unten geöffnete Nut 181, in die ebenfalls der Isoliersteg mit einer schwalbenschwanzartigen Verlängerung formschlüssig eingreift. Der Isoliersteg 71 besteht in diesem Beispiel aus glasfaserverstärktem Polyamid.

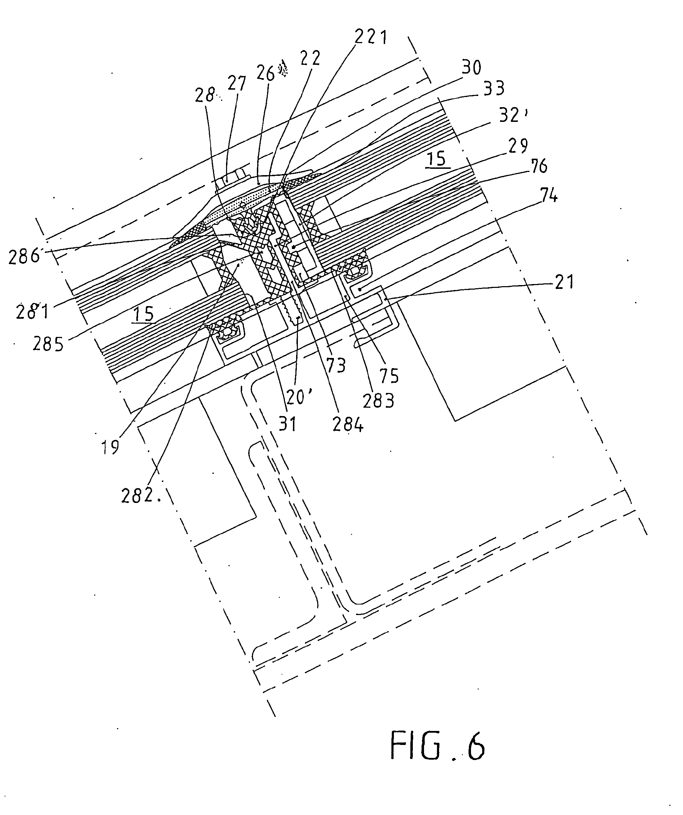

Auf dem oberen Schenkel der C-förmigen Pfette 12 ist in Längsrichtung der Pfette 12 verlaufend ein Stützprofil 21 aufgesteckt, siehe Fig. 2 und Fig. 6. Das Stützprofil 21 ragt ebenfalls mit einem Profilsteg 29 in den Stoßzwischenraum 19 zweier benachbarter Füllungsplatten 15 ein. Das Stützprofil 21 besitzt eine Schraubnut 20'. In die Schraubnut 20' des Stützprofils 21 ist eine als Isolierkörper wirkende Scheibenstoßdichtung 28 eingesetzt, die eine nach oben gerichtete Nut 286 für die Befestigung eines Spreizsteges 221 einer Abdeckleiste 22 besitzt. Diese elastische Abdeckleiste 22 verrastet in der Nut 286 der Scheibenstoßdichtung 28 und besitzt zwei Dichtlamellen 33 in Anlage auf der Oberseite der Füllungsplatten 15. Zur Sicherung der Abdeckleiste 22 und der Scheibenstoßdichtung 28 sowie zur Andrückung der Dichtlamellen 33 an die Füllungsplatten 15 ist die Abdeckleiste 22 von einem metallischen Abdeckprofil 26 übergriffen, das zusammen mit der Abdeckleiste 22 und der Scheibenstoßdichtung 28 mittels Schrauben 27 in der Schraubnut 20' am Stützprofil 21 festgelegt ist. Die Abdeckleiste 22 ist in dieser Ausführungsform als Coextrudat hergestellt, die Dichtlamellen 33 der Abdeckleiste 22 bestehen aus Gummi und der mittlere Bereich der Abdeckleiste 22 besteht aus einem Schaumstoff (Moosgummi). Dieser Schaumstoff besitzt eine sehr geringe Wärmeleitfähigkeit und trägt zur besseren Wärmeisolierung bei. Die Scheibenstoßdichtung 28 liegt zum einen mit einer Dichtlippe 281 am Stirnrand 31 der unteren Füllungsplatte 15 an und stößt auf der gegenüberliegenden Seite in die Zwischenlage 32', die an der Stirnwand 30 der oberen Füllungsplatte 15 anliegt. Zwischen der Zwischenlage 32' und der Scheibenstoßdichtung 28 ist ein Hohlraum 76 zur Falzgrundbelüftung sowie ein Kanal 73 zur Glasstoßentwässerung. Die Glasstoßentwässerung erfolgt, wie aus Fig. 6 zu ersehen ist, in zwei Ebenen. Neben dem Kanal 73 im Stoßbereich 19 der Füllungsplatten 15 sind Wasserkanäle 74, 75 im Bereich des Stützprofils 21 vorgesehen. Die Scheibenstoßdichtung 28 besitzt des Weiteren im Stegbereich Hohlräume 285 zur Erhöhung der Wärmeisolierung und einen nach unten geöffneten Längsschlitz 284 zum Eingreifen des Profilsstegs 29 des Stützprofils 21. An der Unterseite der Scheibenstoßdichtung 28 sind zwei seitlich abragende Arme 282, 283 angeformt, die bis unter die Unterseiten der Füllungsplatten 15 reichen und somit zwischen den Füllungsplatten 15 und dem Stützprofil 21 angeordnet sind. Endseitig sind an diesen Armen 282, 283 in diesem Ausführungsbeispiel Dichtungen angeformt, die in vorgesehene Nuten des Stützprofils 21 verrasten. Der durch die höhere Aufbauhöhe mögliche zusätzliche Wasserkanal 74 ermöglicht das Abführen von Schwitz- und Leckwasser, das bei Gewächshäusern vom Stand der Technik in nachteiliger Weise von der Decke tropft.

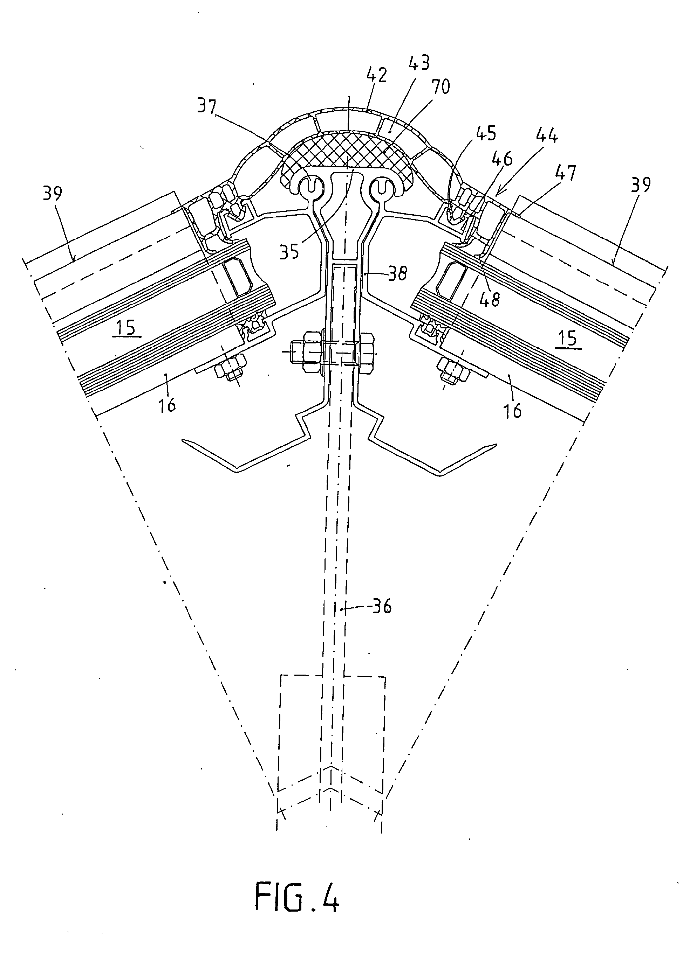

Aus den Fig. 2 und 4 ist der Bereich des Firstes 13 des Gewächshauses ersichtlich. Die Firstpfette 35 ist mit aufragenden Knotenflächen 36 des nicht näher gezeigten Stahlgerüsts des Gewächshauses fest verbunden. Am Kopfbereich der Firstpfette 35 weist diese an beiden Seiten zylindrische Rinnen 37 zur schwenkbaren Aufnahme von Scharnierrahmenprofilen 38 auf. Diese Scharnierrahmenprofile 38, die beiderseits des Firstprofils 35 vorgesehen sind, dienen der Anordnung von Lüftungsklappen 39. Bei den Lüftungsklappen 39 stützen sich die Füllungsplatten 15 oberseitig im Scharnierrahmenprofil 38 ab, während die Füllungsplatten 15 seitlich von den Sprossen 16 umgeben sind. Die Unterseiten der Füllungsplatten 15 der Lüftungsklappe 39 liegen auf einem Lüftungsrahmenprofil 40 auf. Das Lüftungsrandprofil 40 ist mit einem Glashalteprofil 41 verbunden. Wie insbesondere aus Fig. 4 ersichtlich, ist an dem beiderseits der Firstpfette 35 schwenkbar gelagerten Scharnierrahmenprofil 38 eine flexible Abdeckhaube 42 gehalten, die den Firstbereich übergreift und doppelschalig ausgebildet ist, wobei sich zwischen den Schalen Isolierkammern 43 in Form von Hohlkammern befinden. An den Seitenrändern 44 der Abdeckhaube 42 befindet sich je eine Rast 45, die in Form von durchlaufenden Leisten oder durch abstandsweise angeordnete Pilzköpfe ausgebildet sein kann und in Nuten 46 des Scharnierrahmenprofils 38 befestigt ist. Außerdem weisen die Seitenränder 44 der Abdeckhaube 42 an ihrer oberen Schale eine die Sprossen 16 überlappende Dichtlamelle 47 auf, während die Seitenränder 44 der Abdeckhaube 42 im unteren Bereich zwei hintereinanderliegende Dichtlippen 48 aufweisen, die eine Luftkammer zwischen sich einschließen. Diese Dichtlippen 48 liegen dichtend an den Füllungsplatten 15 an. Zwischen der Abdeckhaube 42 und der Oberseite der Firstpfette 35 ist eine zusätzliche Dämpfstoffeinlage 70 vorgesehen. Diese Dämpfstoffeinlage ist im Querschnitt pilzkopfartig, so dass sie die gesamte Oberfläche der Firstpfette 35 abdeckt und eine zusätzliche Isolierung im Bereich der Firstes 13 ermöglicht.

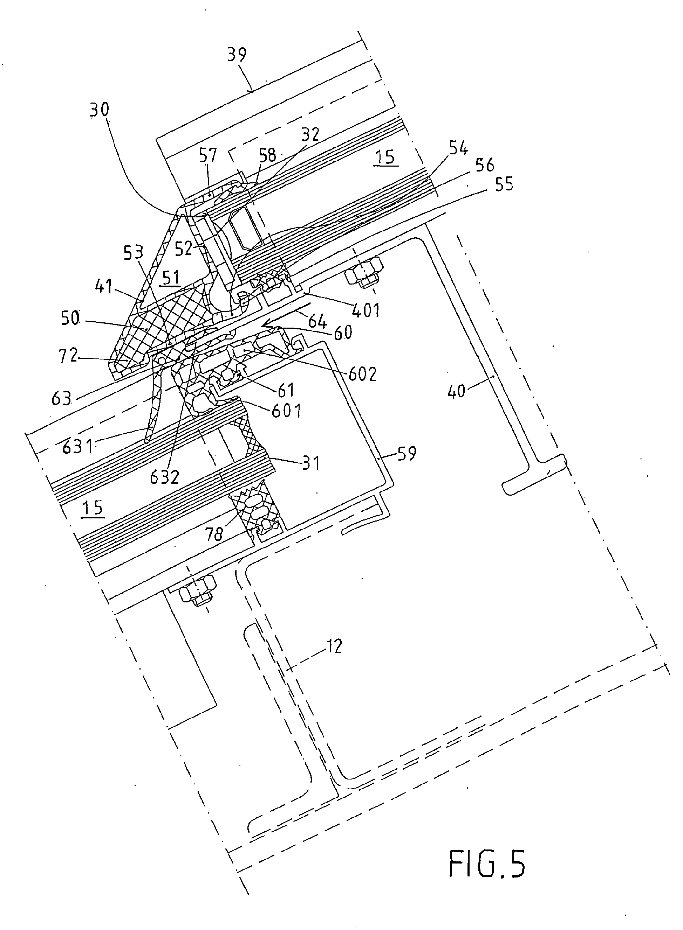

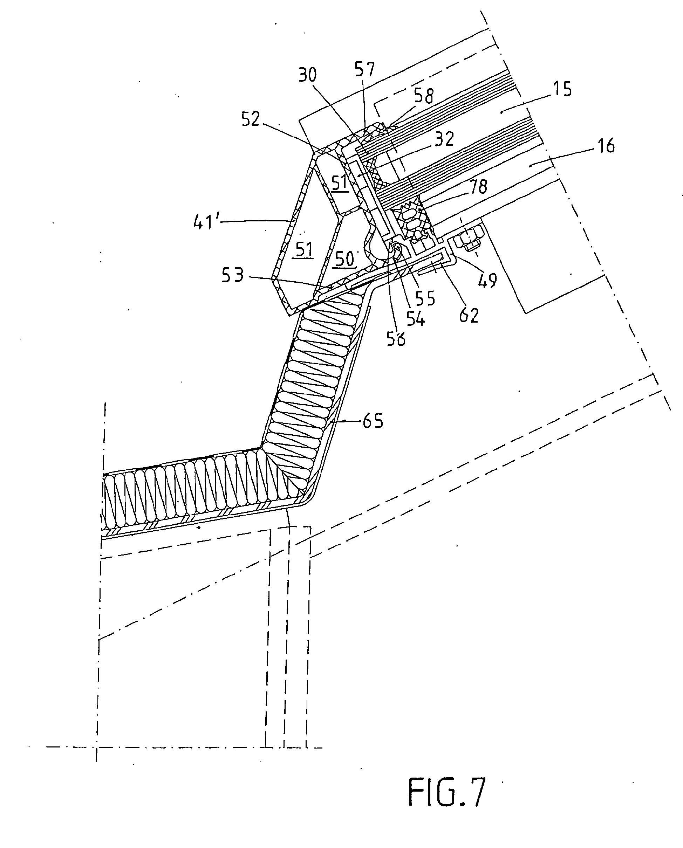

Die Fig. 2 und 5 zeigen, dass sich am Unterrand der Lüftungsklappe 39 ein Lüftungsrandprofil 40 befindet, an welchem ein Glashalteprofil 41 festgelegt ist. Dieses Glashalteprofil 41 ist auch geeignet, am unteren Dachrand der letzten Füllungsplatte 15 eingesetzt zu werden, siehe Fig. 7. Das Glashalteprofil 41 ist eine Hohlkammerprofilleiste aus einem wärmedämmenden Kunststoff und weist bei dem in Fig. 5 dargestellten Ausführungsbeispiel zwei Isolierkammern 50, 51 auf, wobei die untere Isolierkammer 50 mit einem Isolierstoff, insbesondere einem Schaumstoff in Form eines Einschieblings, ausgefüllt ist. Dieser Isoliereinschub 72 trägt zu einer zusätzlichen Wärmedämmung bei. Das Glashalteprofil 41 hat einen im Wesentlichen dreieckförmigen Querschnitt mit einem Anlageschenkel 52, der sich am Stirnrand 30 der Füllungsplatte 15 über eine Zwischenlage 32 abstützt und mit einem rechtwinklig dazu abragenden Stützschenkel 53. Dieser Stützschenkel 53 ist zu einem Klemmschenkel 54 verlängert. Dieser Klemmschenkel 54 greift mit einer Halteklaue 55 in eine Stütznut 56 ein, die am Lüftungsrandprofil 40 vorgesehen ist. Nahezu parallel zum Klemmschenkel 54, der die Füllungsplatte 15 untergreift, ist am Glashalteprofil 41 an der Oberseite ein abragender Halteschenkel 57 vorgesehen, welcher unter Zwischenschaltung eines Dichtbandes 58 die Füllungsplatte 15 im Randbereich übergreift. Zwischen der oberen Füllungsplatte 15 und der unteren Füllungsplatte 15 ist ein Luftspalt 64. Durch diesen Luftspalt 64 dringt bei Gewächshäusern nach dem Stand der Technik Zugluft ein, die auch zu einer unerwünschten Abkühlung führt. Der Luftspalt 64 ist bei dem erfindungsgemäßen Gewächshaus abgedichtet. Hierzu ist eine in Längsrichtung des Gewächshauses verlaufende Pfettendichtleiste 60, die am Lüftungsriegel 59 verrastet ist und eine am Lüftungsrandprofil 40 gehalterte Anschlagdichtung 63 vorgesehen. Diese Anschlagdichtung 63 besitzt eine schlitzförmige Aufnahme 632, in die das freie Ende des waagerechten Auflageschenkels 401 des Lüftungsrandprofils 40 eingreift. Endseitig von der Anschlagdichtung 63 ragt nach unten eine Dichtlippe 631 ab, die auf der Füllungsplatte 15 über die gesamte Längsausdehnung aufliegt. Die Anschlagdichtung 63 ist aus einem Hart-Weich-PVC. Das weiche PVC-Material ist im Bereich der Dichtlippe 631 vorgesehen. Unterhalb des Lüftungsrandprofils 40 ist die Füllungsplatte 15 von einem Lüftungsriegel 59, der an einem Pfettenprofil 12 des Stahlgerüsts festgelegt ist, eingefasst. Der Lüftungsriegel 59 weist in seinem oberen, die Füllungsplatte 15 übergreifenden Schenkel eine Nut 61 auf, in welche die Pfettendichtleiste 60 gehaltert ist. Diese Pfettendichtleiste 60 liegt mit ihrer Oberseite an der Anschlagdichtung 63 an, wenn die Lüftungsklappe 39 geschlossen ist. Die Pfettendichtleiste 60 weist zwei nach unten abragende Dichtlippen 601 auf, die an der vom Lüftungsriegel 59 umschlossenen Füllungsplatte 15 aufliegen und zwischen sich einen isolierenden Hohlraum bilden. Darüber hinaus erstreckt sich die Pfettendichtleiste 60 im Wesentlichen über den gesamten oberen Schenkel des Lüftungsriegels 59 und weist mehrere hintereinander angeordnete Hohlkammern 602 auf, die zur Wärmeisolierung beitragen.

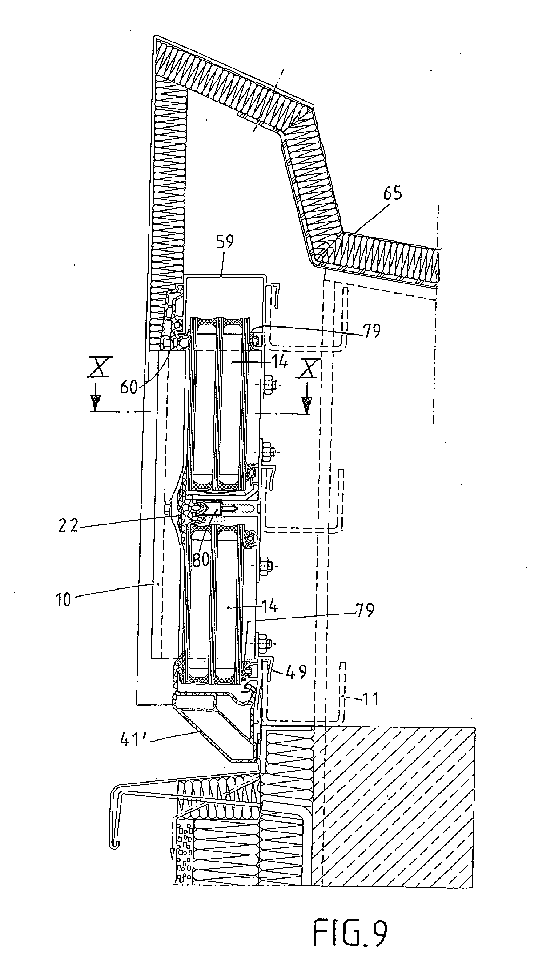

Das in Fig. 5 gezeigte Glashalteprofil 41 ist auch geeignet am unteren Dachrand die Füllungsplatten 15 zu halten. In der letzten Füllungsplatte 15, in Fig. 2 und Fig. 7 zu sehen, wird jedoch eine weitere Ausführungsform eines Glashalteprofils 41' gezeigt. Dieses besitzt drei Hohlkammern. Die von dem Anlageschenkel 52 und Stützschenkel 53 begrenzte Isolierkammer 50 ist nach außen von zwei Isolierkammern 51 umschlossen. Ein Wärmeübergang muss daher durch mindestens zwei Isolierkammern 50, 51 erfolgen. Die äußere Form des Glashalteprofils 41' ist vergleichbar mit dem Glashalteprofil 41. Während am unteren Bereich der Lüftungsklappe 39 ein Lüftungsrandprofil 40 vorgesehen ist, an welchem das Glashalteprofil 41 festgelegt ist, liegt am unteren Dachrand die letzte Füllungsplatte 15 auf einem Rinnenrandprofil 49 auf. Dieses Rinnenrandprofil 49 dient ebenfalls zur Halterung des Glashalteprofils 41'. Deutlich wird in Fig. 7 die größere Aufbauhöhe des Rahmens für die Füllungsplatten 15, sichtbar an dem Dichtstück 78, das im Vergleich zu bekannten Dichtstücken 79 eine größere Höhe aufweist. Als Füllungsplatte 15 im Dachbereich werden Doppelglasisolierscheiben mit einer Breite von etwa 26 mm verwendet. Die Rinnenrandprofile 49 können jedoch auch für Füllungsplatten 14 mit einer Breite von 36 mm verwendet werden, siehe Fig. 9. In diesem Fall unter Zwischenschaltung eines schmaleren Dichtstücks 79. Der in Fig. 7 dargestellte Rinnenrand 65 zeigt ein Rinnenrandprofil 49 mit einer in dem Auflageschenkel für die Füllungsplatte 15 angeformten Einschubleiste 62, die zusammen mit dem Auflagenschenkel der stützenden Aufnahme eines Rinnenrandes 65 dient.

Zusätzlich kann bei dem Glashalteprofil 41 in Fig. 5 und dem Glashalteprofil 41' in Fig. 7 ein an der Oberfläche festgelegtes Abdeckblech vorgesehen werden. Dieses wird endseitig unter einer Abdeckhaube 261 verklemmt. Das Glashalteprofil 41, 41' besteht in diesem Ausführungsbeispiel aus PVC.

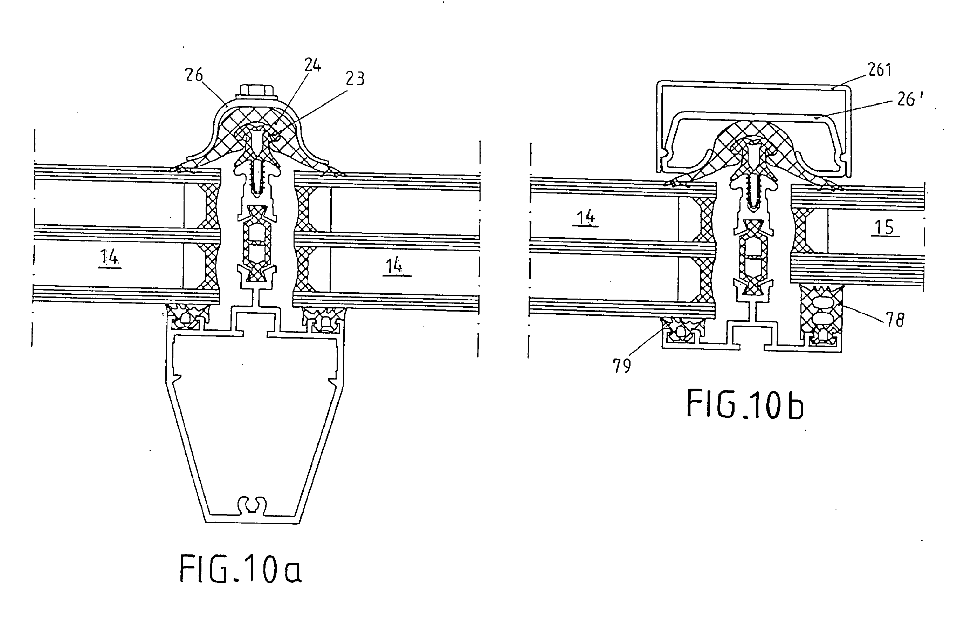

Die Fig. 8a, Fig. 8b, Fig. 8c zeigen alternative Möglichkeiten der Ausbildung von Sprossen 16 im Stoßbereich 19 zwischen den Füllungsplatten 15 im Vergleich zu Fig. 3. Die Ausgestaltung der Sprosse 16 in Fig. 3 mit dem Isoliersteg 71 im mittleren Bereich des Profilsstegs 18, wobei der Isoliersteg 71 schub- und scherfest mit dem Profilsteg 18 verbunden ist und Hohlkammern 77 aufweist, zeigt einen Wärmedurchgangskoeffizienten von 2,5 W/m²K. Die vergleichbare Ausführung gemäß Fig. 8b und die Ausführung gemäß Fig. 8c zeigen den gleichen Wärmedurchgangskoeffizienten. In der Fig. 8c ist der Isoliersteg 71 durch einen Isolierkörper 80 ersetzt, der in diesem Fall eine Hohlkammer 81 besitzt. Zur Erhöhung der Wärmedämmung können auch mehrere übereinander angeordnete Hohlkammern 81 vorgesehen werden. Der Isolierkörper 80 greift in entsprechende Aufnahmen einer Abdeckleiste 24' ein. Eine weitere Möglichkeit der Verbesserung der Wärmedämmung zeigt die Fig. 8a, wo ein verbesserter Wert für den Wärmedurchgangskoeffizienten bis 2,0 W/m²K erzielt wird. Gleiche Werte werden auch bei der Anordnung gemäß den Figuren 10a und 10b erzielt. Dies wird durch das Vorsehen eines zusätzlichen Isolierkörpers 23, in diesem Fall aus einem PVC-Kunststoff-Material, zwischen der Abdeckleiste 24 und dem Profilsteg 18 möglich. Der Einfluss der verwendeten Schrauben, mit denen beispielsweise das Abdeckprofil 26 oder andere außenliegende Bauteile befestigt werden, auf den Wärmedurchgangskoeffizienten ist hier deutlich kleiner als 0,1 W/m²K, weil durch die Schraubverbindung keine direkte Verbindung zwischen den Schrauben und den inneren Bauteilen besteht. Anders ist dies bei der Fig. 8c, wo die Schrauben direkt mit dem Profilsteg 18' verbunden sind und damit ein Wärmedurchgangskoeffizient von 0,3 W/m²K zu berücksichtigen ist.

Die Ausführungsformen gemäß Fig. 8a, Fig. 8b und Fig. 8c unterscheiden sich von der Fig. 3 des Weiteren durch die zusätzlichen Wasserkanäle 74 und die größeren Wasserkanäle 75. Da in Fig. 8b auf einen Isolierkörper 23 verzichtet wurde, ist der Profilsteg 18 im unteren Bereich etwas länger ausgestaltet als in Fig. 8a. Der Profilsteg 18' in Fig. 8c besitzt für den Isolierkörper 80 eine zu den Schraubnuten 20' der Stützprofile 21 vergleichbare Aufnahme. Auf diese Weise kann der Isolierkörper 80 sowohl im Bereich der Sprossen 16 gemäß Fig. 8c als auch im Bereich der Gewächshauswand, wie in Fig. 9 gezeigt, verwendet werden, was die Anzahl der Bauteile reduziert. Zusätzlich kann ein Abdeckprofil 26' in den Fig. 8a, 8b oder ein Abdeckprofil 26" in Fig. 8c mit einer Abdeckhaube 261 versehen sein, die an dem Abdeckprofil 26', 26" verklemmt ist. Die Abdeckhaube 261 schützt die darunter angeordnete Verschraubung. Des Weiteren kann die Abdeckhaube 261 am unteren Rand nach unten über das Ende des Abdeckprofils 26', 26" verlängert sein und somit einen Aufnahmeraum für ein am unteren Ende 161 der Sprosse 16 eingeschobenes dichtendes Endstück 162, beispielsweise aus einem Gummimaterial sein, was in Fig. 2 gezeigt ist. Durch das Einsetzen solcher Endstücke 162 werden störende Geräusche, verursacht durch Zugluft, verhindert.

Fig. 9 zeigt eine Seitenwand des Gewächshauses mit Füllungsplatten 14 aus einer Dreifachglasisolierung, die an der Unterseite mit einem Glashalteprofil 41' eingefasst sind. Das Glashalteprofil 41' ist an einem Rinnenrandprofil 49 festgelegt, welches in diesem Fall von Riegeln 11 gehalten wird. Im oberen Bereich werden die Füllungsplatten 14 von einem Lüftungsriegel 59 umfasst. An der Innenseite ist in einer Nut des Lüftungsriegels 59 ein Dichtstück 79 anliegend an der Füllungsplatte 14 vorgesehen. Dieses ist wieder ein schmales Dichtstück 79 im Vergleich zu dem Dichtstück 78 im Bereich der oberen Dachkante, siehe Fig. 5. Die aus Fig. 5 bekannte Pfettendichtleiste 60 ist hier in einem Lüftungsriegel 59 eingesetzt und dichtet den Übergang zum Rinnenrand 65 ab. In vorteilhafter Weise können zum Einfassen und Halten der breiteren Isolierverglasungen als Füllungsplatten 14 die gleichen Profile wie im Dachbereich verwendet werden, jedoch unter Zwischenschaltung schmalerer Dichtstücke 79. Dies verringert die Anzahl der notwendigen Profile und ermöglicht bedarfsweise höher isolierende Füllungsplatten 14 einzusetzen.

Der Stoßbereich zwischen den Füllungsplatten 14 kann vergleichbar zum Pfettenbereich gemäß Fig. 6 ausgestaltet werden. Im Ausführungsbeispiel gemäß Fig. 9 ist neben der Abdeckleiste 22 ein weiterer Isolierkörper 80 vorgesehen. Der vertikal verlaufende Stoßbereich ist in der Fig. 10a gezeigt. Die Ausbildung ist vergleichbar zum Stoßbereich der Füllungsplatten 15 des Daches, gezeigt in Fig. 8a mit dem zusätzlichen Isolierkörper 23 zwischen der Abdeckleiste 24 und dem als Verbundprofil ausgestalteten Profilsteg, der zwischen die Füllungsplatten 14 eingreift. Diese Ausgestaltung zeigt einen Wärmedurchgangskoeffizienten von 2,0 W/m²K. Eine alternative Ausgestaltung gemäß Fig. 10b zeigt die Möglichkeit in das gleiche Profil unterschiedliche Füllungsplatten 14, 15 einzulegen. Angepasst an den Dachbereich werden vergleichbare Abdeckprofile 26, 26', gegebenenfalls mit Abdeckhaube 261, verwendet.

Die Erfindung ist nicht auf die Ausführungsbeispiele beschränkt.

### Bezugszeichenliste:

- 10: Stütze
- 11: Riegel
- 12: Pfette
- 13: First
- 14: Füllungsplatte
- 15: Füllungsplatte
- 16: Sprosse
- 161: unteres Ende von 16
- 162: Endstück
- 17: Stirnseite von 15
- 18,18': Profilsteg
- 181: Nut
- 182: Nut
- 19: Stoßzwischenraum
- 20, 20': Schraubnuten
- 21: Stützprofil
- 22: Abdeckleiste
- 23: Isolierkörper
- 24, 24': Abdeckleiste
- 25: Dichtlamelle
- 26, 26',26": Abdeckprofil
- 261: Abdeckhaube
- 27: Schraube
- 28: Scheibenstoßdichtung
- 281: Dichtlippe
- 282: Arm
- 283: Arm
- 284: Schlitzaufnahme
- 285: Hohlraum
- 29: Profilsteg
- 30: Stirnrand
- 31: Stirnrand
- 32, 32': Zwischenlage
- 33: Dichtlamelle
- 35: Firstpfette
- 36: Knotenblech
- 37: Rinne
- 38: Scharnierrahmenprofil
- 39: Lüftungsklappe
- 40: Lüftungsrandprofil
- 401: Auflageschenkel
- 41, 41': Glashalteprofil
- 42: Abdeckhaube
- 43: Isolierkammer
- 44: Seitenrand
- 45: Rast
- 46: Nut
- 47: Dichtlamelle
- 48: Dichtlippe
- 49, 49': Rinnenrandprofil
- 50: Isolierkammer
- 51: Isolierkammer
- 52: Anlageschenkel
- 53: Stützschenkel
- 54: Klemmschenkel
- 55: Halteklaue
- 56: Stütznut
- 57: Halteschenkel
- 58: Dichtband
- 59: Lüftungsriegel
- 60: Pfettendichtleiste
- 601: Dichtlippe
- 602: Hohlkammer
- 61: Nut
- 62: Einschubleiste
- 63: Anschlagdichtung
- 631: Dichtlippe
- 632: Schlitzaufnahme
- 64: Luftspalt
- 65: Rinnenrand
- 66: Metallrippe
- 67: Auskleidung
- 70: Dämpfstoffeinlage
- 71: Isolierstegbereich
- 72: Isoliereinschub
- 73: Kanal
- 74, 75: Wasserkanal
- 76: Hohlraum
- 77: Hohlkammer
- 78, 79: Dichtstück
- 80: Isolierkörper
- 81: Hohlkammer

## Patentansprüche

1. Gewächshaus aus von Profilstäben aus Metall, insbesondere aus Aluminium und/oder dessen Legierungen gebildeten Stützen (10), Riegeln (11), Pfetten (12) und Sprossen (16) zusammengesetzten Rahmenteilen, in die unter Zwischenschaltung von Dichtungen Füllungsplatten (14, 15) aus Isolierglasscheiben, durchsichtigen Kunststoffplatten oder dergleichen eingesetzt sind, in deren Stoßzwischenraum Profilstege (18, 18', 29) hineinragen, die einerseits Bestandteil von Sprossen (16) und andererseits Bestandteil von an den Pfetten (12) festgelegten Stützprofilen (21) sind,
wobei die Sprossen (16) als auch die Stützprofile (21) Schraubnuten (20, 20') zur Festlegung einer dichtenden Abdeckleiste (24, 24', 22) und/oder eines Isolierkörpers (23, 28, 80) aufweisen,
wobei die Firstpfette (35) ein Scharnierrahmenprofil (38) der Lüftungsklappe (39) schwenkbeweglich haltert und die Lüftungsklappe (39) ein Lüftungsrandprofil (40) aufweist, das mit den Sprossen (16) der Lüftungsklappe (39) verbunden ist, während an der unteren Dachkante die Sprossen (16) mit einem Rinnenrandprofil (49) verbunden sind,
wobei die Firstpfette (35) von einer an den Scharnierrahmenprofilen (38) der Lüftungsklappen (39) festgelegten, Isolierkammern (43) aufweisenden, flexiblen Abdeckhaube (42) übergriffen ist und
wobei am Lüftungsrandprofil (40) und am Rinnenrandprofil (49) ein Isolierkammern (50, 51) aufweisendes Glashalteprofil (41, 41') den Randbereich der Füllungsplatte (15) umfassend festgelegt ist,
**dadurch gekennzeichnet ,**
**dass** weitere Einrichtungen zur Wärmeisolierung im Bereich der Glashalteprofile (41, 41')und/oder im Bereich der Abdeckhaube (42) und/oder im Bereich des Stoßzwischenraums (19) zwischen den Füllungsplatten (14, 15) und/oder im Bereich des Luftspaltes (64) zwischen dem Lüftungsrandprofil (40) und einem die Stirnseite (17) der darunter angeordneten Füllungsplatte (15) umfassenden Lüftungsriegels (59) vorgesehen sind.

2. Gewächshaus nach Anspruch 1, **dadurch gekennzeichnet, dass** zur besseren Entwässerung zusätzliche Wasserkanäle (74) und/ oder größer dimensionierte Wasserkanäle (74, 75) an der Sprosse (16) und/oder dem Stützprofil (21) vorgesehen werden.

3. Gewächshaus nach Anspruch 1 oder 2, **dadurch gekennzeichnet, dass** die Glashalteprofile (41) als Hohlkammerprofile mit einem am Stirnrand (30) der Füllungsplatten (15) gegebenenfalls über eine Zwischenlage (32) abgestützten Anlageschenkel (52) und einem am Lüftungsrandprofil (40) bzw. am Rinnenrandprofil (49) aufliegenden, rechtwinklig zum Anlageschenkel (52) abragenden Stützschenkel (53) ausgebildet sind, wobei die oberhalb des Stützschenkels (53) angeordnete Isolierkammer (50) nach außen von mindestens zwei weiteren Isolierkammern (51) umgeben ist und/ oder mit einem Isolierstoff (72) ausgefüllt ist.

4. Gewächshaus nach Anspruch 1, **dadurch gekennzeichnet, dass** der mittlere Bereich der Profilstege (18) der Sprossen (16) durch einen Isoliersteg (71) gebildet ist, wobei der Isoliersteg (71) vorzugsweise Hohlkammern (77) aufweist.

5. Gewächshaus nach Anspruch 4, **dadurch gekennzeichnet, dass** der Isoliersteg (71) über eine formschlüssige und/ oder kraftschlüssige Verbindung mit dem Oberteil (181) und dem Unterteil (182) des Profilstegs (18) verbunden ist, wobei im Oberteil (181) des Profilstegs (18) die Schraubnut (20) vorgesehen ist.

6. Gewächshaus nach Anspruch 1, **dadurch gekennzeichnet, dass** der Profilsteg (18') der Sprossen (16) eine Schraubnut (20) besitzt, in welcher ein Isolierkörper (80) mit mindestens einer Hohlkammer (81) gehalten wird.

7. Gewächshaus nach Anspruch 1, **dadurch gekennzeichnet, dass** zwischen der Firstpfette (35) und der die Firstpfette (35) übergreifenden Abdeckhaube (42) eine Dämmstoffeinlage (70) vorgesehen ist.

8. Gewächshaus nach einem der vorhergehenden Ansprüche, **dadurch gekennzeichnet, dass** die die Firstpfette (35) übergreifende Abdeckhaube (42) doppelschalig mit mehreren dazwischen angeordneten Hohlkammern (43) ausgebildet ist und die Hohlkammern (43) mit einem Isolierstoff (72) ausgefüllt sind.

9. Gewächshaus nach einem der vorhergehenden Ansprüche, **dadurch gekennzeichnet, dass** die Abdeckleiste (24, 24', 22) von einem metallischen Abdeckprofil (26, 26', 26") übergriffen und die Abdeckleisten (24, 24', 22) zusammen mit einem Isolierkörper (23, 28, 80) mittels Schrauben (27) in den Schraubnuten (20, 20') der Sprossen (16) oder der Stützprofile (21) festgelegt sind.

10. Gewächshaus nach einem der vorhergehenden Ansprüche, **dadurch gekennzeichnet, dass** der Luftspalt (64) zwischen dem Lüftungsrandprofil (40) und dem darunter liegenden Lüftungsriegel (59) durch eine am Lüftungsriegel (59) gehalterte Pfettendichtleiste (60) einerseits und eine am Lüftungsrandprofil (40) gehalterte Anschlagdichtung (63), welche in Schließlage der Lüftungsklappe (39) am Glashalteprofil (41) und an der darunter liegenden Füllungsplatte (15) anliegt, andererseits überbrückt ist.

11. Gewächshaus nach einem der vorhergehenden Ansprüche, **dadurch gekennzeichnet, dass** ein unteres Ende (161) der Sprossen (16) durch ein eingeschobenes Endstück (162) verschlossen ist.

12. Gewächshaus nach einem der vorhergehenden Ansprüche, **dadurch gekennzeichnet, dass** zur Erhöhung der Wärmedämmung die Scheibenstoßdichtung (28) und/oder das Glashalteprofil (41) und/oder die Pfettendichtleiste (60) und/oder der Isoliersteg (71) und/oder der Isolierkörper (80) mindestens eine Hohlkammer besitzen.

13. Gewächshaus nach einem der vorhergehenden Ansprüche, **dadurch gekennzeichnet, dass** isolierende Hohlräume durch zwei benachbarte Dichtlippen (48) und/ oder Dichtlippen (601) vorgesehen werden.
